(19) Europäisches Patentamt
European Patent Office
Office européen des brevets

(11) Veröffentlichungsnummer: **0 381 862 B1**

(12) **EUROPÄISCHE PATENTSCHRIFT**

(45) Veröffentlichungstag der Patentschrift: **28.04.93**

(21) Anmeldenummer: **89124123.4**

(22) Anmeldetag: **28.12.89**

(51) Int. Cl.5: **C08G 18/81**, C08G 18/48, C09D 175/16, //(C09D175/16, 175:16)

(54) **Vervendung von hydrophilen, (Meth)Acryloylgruppen aufweisenden Polyurethanen als reaktive Emulgatoren für radikalisch härtbare Kunstharze, und ein wässriges Beschichtungsmittel auf Basis eines Gemischs radikalisch härtbarer Kunstharze.**

(30) Priorität: **06.01.89 DE 3900257**

(43) Veröffentlichungstag der Anmeldung:
**16.08.90 Patentblatt  90/33**

(45) Bekanntmachung des Hinweises auf die Patenterteilung:
**28.04.93 Patentblatt  93/17**

(84) Benannte Vertragsstaaten:
**AT BE CH DE ES FR GB IT LI NL SE**

(56) Entgegenhaltungen:
**EP-A- 0 021 824**
**EP-A- 0 154 237**
**EP-A- 0 168 173**
**EP-A- 0 287 736**
**DE-A- 3 437 918**

**POLYMER SCIENCE USSR, Band 15, Nr. 4, Mai 1974, Seiten 814-822; Z.G. ZEMSKOVA et al.: "The synthesis and some properties of oligo(oxyethylene-urethane methacrylates"**

(73) Patentinhaber: **BAYER AG**

**W-5090 Leverkusen 1 Bayerwerk(DE)**

(72) Erfinder: **Meixner, Jürgen, Dr.**
**Josef-Brocker-Dyk 56**
**W-4150 Krefeld(DE)**
Erfinder: **Pedain, Josef, Dr.**
**Haferkamp 6**
**W-5000 Köln 80(DE)**
Erfinder: **Fischer, Wolfgang, Dr.**
**Eschendonk 6**
**W-4000 Meerbusch 3(DE)**

**Beschreibung**

Die Erfindung betrifft die Verwendung von bestimmten, nichtionisch-hydrophilen, (Meth)Acryloylgruppen aufweisenden Polyurethanen als reaktive Emulgatoren für radikalisch härtbare Kunstharze bei der Herstellung von wäßrigen Kunstharzdispersionen und ein Beschichtungsmittel, dessen Bindemittel im wesentlichen aus einem in Wasser dispergierbaren Gemisch von (Meth)Acryloylgruppen aufweisenden Polyurethanen und derartigen nichtionisch-hydrophilen Polyurethanen besteht.

In Wasser dispergierbare Urethanacrylate sind bereits bekannt (vgl. z.B. EP-A 00 98 752 oder DE-OS 2 936 039). Die Hydrophilie dieser bekannten Systeme basiert auf der Anwesenheit von ionischen Zentren, insbesondere von Carboxylat- oder Sulfonatgruppen, die als Gegenionen Alkalikationen oder Ammoniumionen aufweisen, die in den aus den Systemen letztendlich erhaltenen Überzügen verbleiben und deren Wasserresistenz erheblich beeinträchtigen. Die oftmals vorliegenden Amine können im übrigen eine Vergilbung der Lacküberzüge bewirken, während sich die evtl. ebenfalls vorliegenden Hilfslösungsmittel beim Trocknungsprozeß umweltbelastend bemerkbar machen können.

Eine andere Möglichkeit, zu wasserverdünnbaren Produkten zu gelangen, besteht im Einsatz von externen Emulgatoren. So werden beispielsweise gemäß US-PS 4 070 323 Acryloylgruppen tragende Polyurethane mit Hilfe von anionischen oder kationischen Öl-in-Wasser-Emulgatoren (z.B. Natriumlaurylsulfat) in Wasser dispergiert. Diese Emulgatoren werden bei der radikalischen Vernetzung nicht in den Lackfilm eingebaut. Infolgedessen wird der Grad der erreichbaren Wasserfestigkeit der Lackfilme nicht unwesentlich herabgesetzt.

Es war daher die der Erfindung zugrundeliegende Aufgabe neue, reaktive Emulgatoren für radikalisch härtbare Kunstharze aufzufinden, die nicht oder weniger stark ausgeprägt mit den Nachteilen der Emulgatoren gemäß Stand der Technik behaftet sind.

Diese Aufgabe konnte mit der Bereitstellung der nachstehend näher beschriebenen erfindungsgemäßen reaktiven Emulgatoren gelöst werden.

Bei den erfindungswesentlichen Emulgatoren handelt es sich um (Meth)Acryloylgruppen und innerhalb von Polyetherketten eingebauten Ethylenoxideinheiten aufweisende Polyurethane, die nach einem speziellen Verfahren hergestellt werden. Derartige hydrophile Polyurethane sind beispielsweise aus Polymer Science USSR, Band 15, Nr. 4, Mai 1974, Seiten 814 - 822, EP-A-0 168 173, EP-A-0 154 237 oder EP-A-0 021 824 bereits bekannt, jedoch nimmt keines dieser Dokumente auf die Verwendbarkeit dieser Stoffe als Emulgatoren in wäßrigen Systemen Bezug und entsprechend findet sich auch kein Hinweis auf wäßrige Beschichtungsmittel der nachstehend näher beschriebenen erfindungsgemäßen Art.

Gemäß DE-A-3 437 918 werden wäßrige Oligourethan-Dispersionen aus Polyisocyanat, Makrodiol und Hydroxyacrylat als Lederbeschichtungsmittel eingesetzt, jedoch erfolgt die Herstellung dieser Verbindungen ebenso wie die Herstellung der in EP-A-0 287 736 beschriebenen hydrophilen Polyurethane nicht nach der nachstehend näher beschriebenen Art und Weise. Im übrigen ist auch diesen beiden letztgenannten Vorveröffentlichungen keinerlei Hinweis auf die Verwendbarkeit der hydrophilen Polyurethane als Emulgatoren für hydrophobe Kunstharze zu entnehmen.

Gegenstand der Erfindung ist die Verwendung von Polyurethanen des Molekulargewichts Mw 1000 bis 10000 mit einem Gehalt an (i) olefinischen Doppelbindungen (berechnet als $=C=C=$, Molekulargewicht $=$ 24) von mindestens 1,0 Gew.-% und an (ii) über Polyethylenglykol eingebauten Ethylenoxideinheiten von 20 bis 80 Gew.-%, die durch Umsetzung von

a) 1,0 Mol einer Polyisocyanatkomponente, bestehend aus mindestens einem organischen Polyisocyanat, mit

b) 0,9 bis 2,5 Mol einer (Meth)Acryloylgruppen aufweisenden Alkoholkomponente, bestehend aus mindestens einem (Meth)Acryloylgruppen aufweisenden einwertigen Alkohol des Molekulargewichts Mn 116 bis 1000 und anschließende Umsetzung des aus a) und b) gebildeten Umsetzungsprodukts mit

c) 0,25 bis 0,55 Mol einer Polyethylenglykol-Komponente, bestehend aus mindestens einem linearen Polyetherglykol des Molekulargewichts Mn 400 bis 4000, dessen Alkylenoxideinheiten zumindest zu 80% Ethylenoxideinheiten darstellen,

unter Einhaltung eines NCO/OH-Äquivalentverhältnisses, bezogen auf alle Ausgangskomponenten a) bis c), von 0,7 : 1 bis 1,1 : 1 hergestellt worden sind,

als reaktive Emulgatoren für in Wasser nicht dispergierbare, radikalisch härtbare Kunstharze bei der Herstellung von wäßrigen Kunstharzdispersionen.

Gegenstand der Erfindung ist auch ein wäßriges, ein radikalisch härtbares Bindemittel sowie gegebenenfalls aus der Lacktechnologie übliche Hilfs- und Zusatzmittel enthaltendes Beschichtungsmittel, dadurch gekennzeichnet, daß das Bindemittel im wesentlichen aus einem Gemisch besteht aus

A) 50 bis 95 Gew.-Teilen mindestens eines, in Wasser nicht dispergierbaren, mindestens 2,5 Gew.-% olefinische Doppelbindungen (berechnet als $=C=C=$, Molekulargewicht $= 24$) in Form von chemisch eingebauten (Meth)Acryloylgruppen aufweisenden Polyurethans des Molekulargewichtsbereichs Mw 500 bis 10000 mit einem Gehalt an über Polyethylenglykole eingebauten Ethylenoxideinheiten von maximal 5 Gew.-%

und

B) 5 bis 50 Gew.-Teilen mindestens eines, die Dispergierbarkeit des Gemischs in Wasser gewährleistenden Polyurethans mit einem Gehalt an (i) olefinischen Doppelbindungen (berechnet als $=C=C=$, Molekulargewicht $=24$) von mindestens 1,0 Gew.-% und an (ii) über Polyethylenglykol eingebauten Ethylenoxideinheiten von 20 bis 80 Gew.-%, das nach der oben genannten Methode hergestellt worden ist,

mit der Maßgabe, daß der Gesamtgehalt des Gemischs an von der Komponente c) herrührenden Ethylenoxideinheiten maximal 20 beträgt.

Bei den erfindungsgemäß als Emulgatoren zu verwendenden, nichtionisch-hydrophilen Polyurethanen handelt es sich im wesentlichen um Umsetzungsprodukte der bereits obengenannten Ausgangskomponenten a) bis c), wobei bei der Herstellung der Polyurethane vorzugsweise pro Mol der Komponente a) 1,0 bis 2,2 Mol der Komponente b) und 0,4 bis 0,5 Mol der Komponente c) zum Einsatz gelangen.

Die Komponente a) besteht aus mindestens einem organischen Polyisocyanat. Geeignete Polyisocyanate sind beliebige, aus der Polyurethanchemie an sich bekannte organische Polyisocyanate mit aliphatisch, cycloaliphatisch und/oder aromatisch gebundenen Isocyanatgruppen, die vorzugsweise ein Molekulargewicht von 168 bis 1000, vorzugsweise 168 bis 300 liegendes Molekulargewicht aufweisen. Geeignet sind beispielsweise 1,6-Diisocyanatohexan (HDI), 1-Isocyanato-3,3,5-trimethyl-5-isocyanatomethyl-cyclohexan (IPDI), 4,4'-Diisocyanatodicyclohexylmethan, 4,4'-Diisocyanatodiphenylmethan, dessen technischen Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol.

Gut geeignet sind auch Biuret-, Isocyanurat- oder Urethan-modifizierte Polyisocyanate auf Basis dieser einfachen Polyisocyanate. Diese Derivate weisen im allgemeinen ein bis zu 1000 liegendes Molekulargewicht auf. Die Herstellung derartiger Derivate ist beispielsweise in US-PS 3 124 605, US-PS 3 183 112, US-PS 3 919 218 oder US-PS 4 324 879 beschrieben.

Bei der Komponente b) handelt es sich um (Meth)Acryloylgruppen aufweisende einwertige Alkohole bzw. um beliebige Gemische derartiger Alkohole. Hierunter sind durchschnittlich pro Molekül eine freie Hydroxylgruppe aufweisende Ester der Acrylsäure oder der Methacrylsäure mit mehrwertigen Alkoholen zu verstehen. Die Ester weisen ein als Zahlenmittel bestimmtes Molekulargewicht von 116 bis 1000, vorzugsweise 116 bis 750 auf. Beispiele für solche ethylenisch ungesättigte Partialester sind Hydroxyethyl(meth)-acrylat, 2- und 3-Hydroxypropyl-(meth)acrylat, 2-, 3- und 4-Hydroxybutyl(meth)acrylat und Umsetzungsprodukte aus (oxalkyliertem) Trimethylolpropan mit (Meth)Acrylsäure wie z.B. das Reaktionsprodukt aus 2 Mol Acrylsäure und 1 Mol eines oxethylierten Trimethylolpropans (OH-Zahl 550, Oxethylierungsgrad ca. 4).

Bei der Komponente c) handelt es sich um lineare Polyetherglykole eines als Zahlenmittel bestimmten Molekulargewichts von 400 bis 4000, vorzugsweise 600 bis 2000, deren Alkylenoxideinheiten zumindest zu 80 %, vorzugsweise zu 100 % Ethylenoxideinheiten darstellen. Der Begriff "Polyethylenglykole" soll somit nicht nur echte Polyethylenglykole, deren Alkylenoxideinheiten ausschließlich Ethylenoxideinheiten darstellen, sondern auch Polyalkylenglykole umfassen, deren Alkylenoxideinheiten überwiegen, d.h. zumindest zu 80 % Ethylenoxideinheiten darstellen. Derartige "gemischte" Polyalkylenglykole entstehen beispielsweise durch Verwendung von Gemischen verschiedener Alkylenoxide beispielsweise von Ethylenoxid und Propylenoxid im Molverhältnis ≥8:1 bei der Herstellung der Polyetherglykole durch Alkoxylierung geeigneter zweiwertiger Startermoleküle wie beispielsweise Wasser, Ethylenglykol oder Propylenglykol. Vorzugsweise besteht die Komponente c) jedoch aus reinen Polyethylenglykolen.

Die Herstellung der erfindungsgemäßen, als Emulgatoren zu verwendenden, hydrophilen Polyurethane durch Umsetzung der genannten Ausgangskomponenten kann in Substanz oder in gegenüber Isocyanatgruppen inerten Lösungsmitteln wie beispielsweise Aceton, Methylethylketon, Ethylacetat, Butylacetat, Toluol, niedermolekularen Estern der (Meth)Acrylsäure oder Gemischen derartiger Lösungsmittel erfolgen, wobei vorzugsweise Reaktionstemperaturen von 20 bis 100 ° C, insbesondere 20 bis 80 ° C eingehalten werden.

Bei dieser Umsetzung kommen pro Mol der Komponente a) 0,9 bis 2,5 Mol, vorzugsweise 1,0 bis 2,2 Mol der Komponente b) und 0,25 bis 0,55 Mol, vorzugsweise 0,4 bis 0,5 Mol der Komponente c) zum Einsatz, wobei es wesentlich ist, daß zunächst in einem ersten Reaktionsschritt die Umsetzung zwischen der Komponente a) und der Komponente b) durchgeführt wird, worauf sich die Umsetzung des so erhaltenen Umsetzungsprodukts mit der Komponente c) anschließt.

In der Praxis kann somit beispielsweise so vorgegangen werden, daß das Polyisocyanat vorgelegt und unter milden Bedingungen, z.B. innerhalb der obengenannten Temperaturbereiche mit dem ungesättigten Monoalkohol b) umgesetzt wird, worauf sich die Umsetzung mit dem Polyethylenglykol c) ebenfalls innerhalb der genannten Temperaturbereiche anschließt, bis der NCO-Gehalt auf unter 0,1 Gew.-% abgefallen ist. Grundsätzlich werden hierbei Art und Mengenverhältnisse der Ausgangskomponenten innerhalb der genannten Bereiche so gewählt, daß, bezogen auf die Komponenten a) bis c) ein NCO/OH-Äquivalentverhältnis von 0,7:1 bis 1,1:1 gewährleistet ist.

Die Urethanbildungsreaktionen können in an sich bekannter Weise z.B. mit Zinnoctoat, Dibutylzinndilaurat oder tertiären Aminen katalysiert werden Ebenso kann das Urethanacrylat durch Zugabe geeigneter Inhibitoren und Antioxydantien von je 0,001 bis 0,3 Gew.-%, bezogen auf Gesamtmischung, vor vorzeitiger und unerwünschter Polymerisation geschützt werden.

Die auf diese Weise erhaltenen hydrophilen (Meth)Acryloylgruppen aufweisenden Polyurethane weisen ein als Gewichtsmittel bestimmtes, nach der Methode der Gelpermeationschromatographie ermittelbares Molekulargewicht Mw von 1000 bis 10000, vorzugsweise 1500 bis 5000, einen Gehalt an olefinischen Doppelbindungen (berechnet als $=C=C=$, Molekulargewicht $= 24$) von mindestens 1,0 Gew.-%, vorzugsweise 1,5 bis 6,0 Gew.-% und einen Gehalt an über Polyethylenglykol eingebauten Ethylenoxideinheiten $-CH_2-CH_2-O-$ von 20 bis 80, vorzugsweise 30 bis 75 Gew.-% auf.

Die hydrophilen Polyurethane stellen wertvolle Emulgatoren für hydrophabe, in Wasser nicht dispergierbare, radikalisch vernetzbare Kunstharze, insbesondere für hydrophobe (Meth)Acryloylgruppen aufweisende Polyesterharze und besonders bevorzugt (Meth)Acryloylgruppen enthaltende Polyurethanharze dar

Hydrophabe, (Meth)Acryloylgruppen aufweisende Polyurethanharze, die mit den genannten hydrophilen Polyurethanen zu den erfindungsgemäßen, wasserdispergierbaren Gemischen vereinigt werden könnenm,sind insbesondere solche in Wasser nicht dispergierbare Polyurethane, die ein als Gewichtsmittel bestimmtes, nach der Methode der Gelpermeationschromatographie ermittelbares Molekulargewicht Mw von 500 bis 10000, vorzugsweise 1000 bis 5000, einen Gehalt an olefinischen Doppelbindungen (berechnet als $=C=C=$, Molekulargewicht $= 24$) in Form von chemisch eingebauten (Meth)Acryloylgruppen von mindestens 2,5 Gew.-%, vorzugsweise 3 bis 15 Gew.-% und einen Gehalt an Ethylenoxideinheiten, die über Polyethylenglykole eingebaut worden sind von maximal 5 Gew.-% auf. Im allgemeinen handelt es sich bei diesen hydrophoben Polyurethanen um klare, farblose Flüssigkeiten, die lösungsmittelfrei bei 23°C eine Viskosität von 10 bis einigen Tausend Pa.s aufweisen oder auch um bei Raumtemperatur feste Substanzen.

Die Herstellung derartiger Polyurethane erfolgt durch an sich bekannte Umsetzung von organischen Polyisocyanaten der oben bereits unter a) beispielhaft genannten Art mit Hydroxylgruppen aufweisenden Estern der Acrylsäure oder Methacrylsäure der oben bereits unter b) beispielhaft genannten Art und gegebenenfalls weiteren Aufbaukomponenten mit gegenüber Isocyanatgruppen reaktionsfähigen Gruppen.

Zu den letztgenannten Aufbaukomponenten gehören einfache mehrwertige Alkohole des Molekulargewichtsbereichs 62 bis 400 wie beispielsweise Ethylenglykol, Propylenglykol, die isomeren Butandiole oder Hexandiole, Glycerin, Trimethylolpropan, Diethylenglykol, Triethylenglykol, Dipropylenglykol, außerdem die aus der Polyurethanchemie an sich bekannten Polyetherpolyole, die durch Alkoxylierung von einfachen Alkoholen der beispielhaft genannten Art in an sich bekannter Weise zugänglich sind, und die Molekulargewichte von bis zu 2000, vorzugsweise bis zu 1000 aufweisen; ferner die aus der Polyurethanchemie an sich bekannten Polyesterpolyole, die durch Umsetzung der beispielhaft genannten mehrwertigen Alkohole mit mehrwertigen Säuren oder Anhydriden mehrwertiger Säuren wie beispielsweise Adipinsäure, Phthalsäure, Phthalsäureanhydrid, Tetrahydrophthalsäure oder Tetrahydrophthalsäureanhydrid in an sich bekannter Weise zugänglich sind; ferner Schwefel enthaltende Polyole der in DE-OS 2 737 406 beispielhaft genannten Art wie insbesondere Thiodiglykol.

Zur Herstellung der hydrophoben Polyurethane werden die beispielhaft genannten Ausgangsmaterialien unter Einhaltung eines Äquivalentverhältnisses von Isocyanatgruppen zu gegenüber Isocyanatgruppen reaktionsfähigen Gruppen von 0,7:1 bis 1,1:1 in beliebiger Reihenfolge miteinander zur Reaktion gebracht, wobei auch hier vorzugsweise Reaktionstemperaturen von 20 bis 100°C, vorzugsweise 20 bis 80°C eingehalten werden, und wobei ferner auch hier die bereits genannten Hilfsmittel mitverwendet werden können.

In den in Wasser dispergierbaren Gemischen, die in den erfindungsgemäßen Beschichtungsmitteln als Bindemittel eingesetzt werden, liegen 50 bis 95, vorzugsweise 70 bis 95 Gew.-Teile der genannten hydrophoben Polyurethane in Abmischung mit 5 bis 50, vorzugsweise 5 bis 30 Gew.-Teilen der genannten, als Emulgatoren wirkenden, hydrophilen Polyurethane vor. Es ist jedoch wichtig, Art und Mengenverhältnisse der Einzelkomponenten im Rahmen der gemachten Ausführungen so zu wählen, daß der Gesamtgehalt der in Wasser dispergierbaren Gemische an von der Komponente c) herrührenden Ethylenoxideinheiten maximal 20, vorzugsweise maximal 15 Gew.-% beträgt.

4

Die Herstellung der Gemische kann durch einfaches Abmischen der Einzelkomponenten, gegebenenfalls in Gegenwart von inerten Lösungsmitteln der oben bereits beispielhaft genannten Art erfolgen.

Zur Herstellung der erfindungsgemäßen wäßrigen Beschichtungsmittel werden die Gemische in Wasser dispergiert, was beispielsweise durch einfaches Einrühren von Wasser in die vorgelegte Mischung der Polyurethane mittels üblicher Dissolver erfolgen kann.

Zur Ausbildung einer feinteiligen Emulsion ist portionsweiser Wasserzusatz bei Temperaturen unterhalb 40°C vorteilhaft. Es können auf diese Weise stabile Öl-in-Wasser-Emulsionen erhalten werden.

Die auf diese Weise erhaltenen wäßrigen Dispersionen stellen wertvolle wäßrige Bindemittel für Überzugsmittel dar. Sie können als solche oder in Kombination mit den aus der Lacktechnologie bekannten Hilfs- und Zusatzmittel wie zB. Füllstoffen, Pigmenten, Lösungsmitteln, Verlaufshilfsmitteln u.dgl. zur Herstellung von Beschichtungen auf beliebigen Substraten verwendet werden.

Geeignete Substrate sind Papier, Kartonage, Leder, Holz, Kunststoffe, Vlies, Textilien, keramische Materialien, mineralische Materialien, Glas, Metall, Kunstleder, fotografische Materialien wie z.B. mit fotografischer Schicht versehenes Papier.

Der Auftrag dieser Beschichtungsmittel kann auf bekannte Weise durch Spritzen, Rakeln, Walzen, Streichen, Tauchen oder Gießen erfolgen. Nach Verdunsten des Wassers sowie gegebenenfalls mitverwendeten inerten Lösungsmitteln kann die Vernetzung der Überzüge entweder mittels energiereicher Strahlung, wie UV-Licht, Elektronen- oder Gammastrahlen oder durch Härtung mit Metallsalzen von Sikkativsäuren und (Hydro)-peroxiden bei Temperaturen zwischen 80°C und 250°C erfolgen.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in der Monographie von J. Korsar, Light-Sensitive Systems, J. Wiley Sons, New York - London- Sydney 1965 beschrieben sind.

Weiterhin gut geeignet sind Benzoinether wie Benzoinisopropylether, Benzilketale, wie z.B. Benzildimethylketal und Hydroxyalkylphenone, wie z.B 2-Hydroxy-2-methyl-1-phenyl-propan-1-on.

Die erwähnten Fotoinitiatoren, die je nach Verwendungszweck der erfindungsgemäßen Massen in Mengen zwischen 0,1 und 10 Gew.-%, vorzugsweise 0,1 bis 5 Gew.-%, bezogen auf das Gewicht der dispergiert vorliegenden hydrophilen und hydrophoben Polyurethane, eingesetzt werden, können als einzelne Substanz oder, wegen häufiger vorteilhafter synergistischer Effekte, auch in Kombination miteinander verwendet werden.

Die bei der Vernetzung mittels Peroxiden eingesetzten Metallsalze von Sikkativsäuren sind z.B. Cobalt, Blei und Mangansalze van Säuren wie Leinölfettsäuren, Tallölfettsäuren, Sojaölfettsäuren, von Harzsäuren, wie Abietinsäure und Naphthensäure oder von Essigsäure und Isooctansäure. Sie werden in Form von organischen Lösungen in solchen Mengen eingesetzt, daß der Metallgehalt, bezogen auf das Gewicht der dispergiert vorliegenden hydrophilen und hydrophoben Polyurethane 0,005 bis 1 Gew.-% entspricht.

Als (Hydro)-Peroxide seien beispielhaft genannt: Ditert.-butylperoxid, Benzoylperoxid, Cyclohexanonperoxid, Methylethylketonperoxid, Acetylacetonperoxid, Dinonylperoxid, Bis-(4-tert.-butylcyclohexyl)-peraxydicarbonat, tert.-Butylhydroperoxid, Cumolhydroperoxid, 2,5-Dimethylhexan-2,5-hydroperoxid und Diisopropylbenzolmonohydroperoxid. Vorzugsweise werden diese (Hydro)-Peroxide in Mengen von 1 bis 10 Gew.-%, bezogen auf das Gewicht der dispergiert vorliegenden hydrophilen und hydrophoben Polyurethane eingesetzt.

In den nachfolgenden Beispielen beziehen sich alle Prozentangaben auf Gewichtsprozente.

Beispiele

Herstellung von Ausgangsmaterialien

Hydrophobes Polyurethan A1:

Es wird ein Acryloylgruppen enthaltendes Polyurethan hergestellt durch Umsetzung von 111 g (0,5 Mol) Isophorondiisocyanat mit 46,4 g (0,4 Mol) Hydroxyethylacrylat, 6,1 g (0,05 Mol) Thiodiglykol und 134 g (0,2 Mol) eines oxethylierten Trimethylolpropans mit einer OH-Zahl 250 (Molgewicht 675).

Nach Vorlegen der gesamten Isocyanatmenge wird unter Kühlen und Rühren bei 40 bis 50°C innerhalb von 2 Stunden das Thiodiglykol zugetropft, wobei die Reaktionstemperatur von 60°C nicht überschritten werden sollte. Anschließend wird unter Überleiten von Luft nach Zugabe von 0,1 g Zinnoctoat und 0,15 g Benzochinon bei 50 bis 60°C unter Kühlen das Hydroxyethylacrylat in der Weise eingetropft, daß die Temperatur 65°C nicht überschreitet. Nach Erreichen des NCO-Wertes von ca. 14 % (ca. 4 h) wird das

5

oxethylierte Trimethylolpropan portionsweise zugegeben.

Es wird unter Überleiten trockener Luft so lange bei 60°C gerührt, bis der NCO-Wert 0,1 Gew-% beträgt. Es entsteht ein farb- und geruchsloses mittelviskoses Harz (Viskosität: 90 %ig in Butylacetat): ca 15 Pa.s/23°C) mit einem Gehalt an olefinischen Doppelbindungen (Molekulargewicht = 24) von 3,2 Gew.-%.

**Hydrophobes Polyurethan A2:**

Es wird zunächst ein OH-gruppenhaltiger Acryloylgruppen enthaltender Partialester hergestellt, indem ein propoxyliertes Trimethylolpropan (OH-Zahl = 550 (mg KOH/g)) mit Acrylsäure azeotrop verestert wird.

925 g (3,0 Mol) propoxyliertes Trimethylolpropan werden mit 430 g (6,0 Mol) Acrylsäure, 12 g p-Toluolsulfonsäure, 1 g p-Methoxyphenol, 1,2 g Di-tert.-butylhydrochinon und 280 g Toluol unter Durchleiten von Luft zum Rückfluß erhitzt und das entstehende Reaktionswasser azeotrop entfernt. Nach Erreichen einer Säurezahl kleiner 3 (mg KOH/g Substanz) wird das Lösungsmittel im Vakuum entfernt und das Produkt einer Klärfiltration unterworfen. Es wird ein OH-gruppenhaltiger ethylenisch ungesättigter Partialester mit folgenden Kenndaten erhalten:

Säurezahl: 2
OH-Zahl: 115

Anschließend wird das vorstehend genannte Zwischenprodukt mit 2,4-Diisocyanatotoluol umgesetzt:

In einer Rührapparatur werden unter Überleiten von trockener Luft 174 g (1,0 Mol) 2,4-Diisacyanatotoluol und 0,7 g p-Methaxyphenol vorgelegt und auf 40 bis 65°C erwärmt. Innerhalb von ca. 2 Stunden werden 980 g des vorstehend genannten Zwischenprodukts zugegeben und bei der angegebenen Temperatur so lange gerührt, bis der NCO-Wert kleiner 0,1 Gew.-% beträgt. Die Viskosität des hydrophoben Acrylatpräpolymers A2 beträgt 46 Pa.s (23°C). Der Gehalt an olefinischen Doppelbindungen liegt bei 9,7 Gew.-%.

**Hydrophobes Polyurethan A3:**

Es wird zunächst ein Isocyanuratgruppen enthaltendes Polyisocyanat auf Basis Hexamethylendiisocyanat (HDI) hergestellt.

1344 g (8,0 Mol) HDI werden bei 23°C mit 1 ml 2-Dimethylaminomethyl-nonylphenol versetzt. Nach 5-minütigem Verrühren tropft man ebenfalls bei 23°C innerhalb von 15 Minuten 40 ml einer 2 %igen Lösung von 2-Hydroxyethyl-trimethylammoniumhydroxid in Dimethylformamid/Methanol (8:1) ein.

Innerhalb dieser Zeit steigt die Temperatur auf 35°C und nach weiteren 45 Minuten auf 40°C an. Bei dieser Temperatur wird die Trimerisationsreaktion aufrechterhalten. Nach 6 Stunden ist ein NCO-Gehalt von 40,5 % erreicht. Das Reaktionsprodukt wird mit 0,3 ml Nonofluorbutansulfonsäure in 1 ml Dimethylformamid stabilisiert und anschließend im Hochvakuum gedünnschichtet.

Iod-Farbzahl: 3
NCO-Gehalt: 22,0 %
Viskosität (25°C): 3100 mPa.s

Anschließend wird vorstehend erhaltenes Polyisocyanat mit Hydroxyethylacrylat zum Acrylatpräpolymer A3 umgesetzt:

283 g (0,5 Mol) NCO des Polyisocyanates werden in 365 Teilen wasserfreien Toluols gelöst und bei Raumtemperatur mit 174 g (1,5 Mol) Hydroxyethylacrylat versetzt. Nach Zusatz von 0,5 g Zinndioctoat wird die Temperatur langsam auf 60°C erhöht und die Mischung solange gerührt, bis der NCO-Gehalt auf 0 gesunken ist. Nach dem Abkühlen auf Raumtemperatur werden 1,8 g 2,6-Di-t-butylphenol zugesetzt und soviel Lösungsmittel durch Vakuumdestillation entfernt, bis die Konzentration 70 % beträgt. Die erhaltene Lösung ist fast farblos mit leichtem Gelbstich und besitzt eine Viskosität von ca. 5000 mPa.s (23°C). Der Gehalt an olefinischen Doppelbindungen liegt bei 7,9 Gew.-%.

**Hydrophobes Polyurethan A4:**

Zu 222 g (1,0 Mol) Isophorondiisocyanat und 0,5 g Hydrochinanmonomethylether wird unter Kühlen und Rühren innerhalb von 2 Stunden 116 g (1,0 Mol) Hydroxyethylacrylat in der Weise zugetropft, daß die Temperatur 65°C nicht überschreitet. Nach Zusatz von 0,5 g Zinndioctoat und 42 g Butylacetat werden 38 g (0,5 Mol) Propandiol-1,2 zugetropft und die Mischung solange bei 60 bis 70°C gerührt, bis der NCO-Gehalt auf kleiner 0,1 Gew.-% gesunken ist. Es entsteht eine farblose, fast feste Substanz mit einem Gehalt an olefinischen Doppelbindungen von 6,4 Gew.-%.

Hydrophile Polyurethane B:

Die in Tabelle 1 aufgeführten Polyisocyanate werden jeweils zusammen mit 0,1 % Hydrochinonmonomethylether auf 50 bis 60°C erwärmt. Danach wird der jeweilige Acryloylgruppen enthaltende Monoalkohol unter Rühren so zugetropft, daß die Temperatur 65°C nicht überschreitet. Nach Zugabe von Butylacetat und 0,2 Gew.-% Zinndioctoat wird das jeweilige Polyethylenglykol unter Rühren portionsweise zugegeben. Die Mischung wird daraufhin bei 60 bis 70°C gerührt, bis der NCO-Gehalt kleiner 0,1 Gew.-% beträgt. Es entstehen farblose bis hellgelbe, klare, hochviskose Flüssigkeiten, die nach einiger Zeit z.T. auskristallisieren.

Tabelle 1

| Ausgangsmaterialien (Mol) | B1 | B2 | B3 | B4 |
|---|---|---|---|---|
| Isophorondiisocyanat | 1,0 | 1,0 | | |
| Toluylendiisocyanat | | | 1,0 | |
| Trimerisiertes Hexamethylen-diisocyanat (siehe A3) | | | | 1,0 |
| Hydroxyethylacrylat | 1,0 | | | 2,1 |
| propoxyliertes Trimethylol-propandiacrylat (siehe A2) | | 1,0 | 1,0 | |
| Polyethylenglykol (MG 1000) | | 0,5 | 0,5 | 0,45 |
| Polyethylenglykol (MG 1550) | 0,5 | | | |
| Festgehalt (%) | 90 | 90 | 90 | 80 |
| Ethylenoxideinheiten, Gew.-%, bezogen auf Feststoff: | 69,6 | 43,9 | 56,7 | 35,7 |
| olefinische Doppelbindungen (MG = 24), bezogen auf Feststoff: | 2,2 | 4,2 | 3,5 | 4,0 |

Beispiele

Zur Herstellung der Emulsionen werden jeweils die in Tabelle 2 genannten Mengen an hydrophoben Polyurethanen A und hydrophilen Polyurethanen B gemischt, mit je 110 g Wasser im Dissolver bei 8000 U/min. 2 Minuten geschert und anschließend mit Wasser unter Rühren (1000 U/min.) auf 50 % Festkörper eingestellt. Es entstehen feinteilige Öl-in-Wasser-Emulsionen.

Tabelle 2

| Komponenten (g) | Beispiel | | | | |
|---|---|---|---|---|---|
| | 1 | 2 | 3 | 4 | 5 |
| A1 | 200 | | | | |
| A2 | | 200 | | | |
| A3 | | | 200 | 175 | |
| A4 | | | | | 200 |
| B1 | 50 | | | | 50 |
| B2 | | | 50 | | |
| B3 | | 50 | | | |
| B4 | | | | 75 | |
| Ethylenoxideinheiten, Gew.-%, bezogen auf Feststoff: | 13,9 | 10,4 | 14,1 | 11,7 | 13,9 |
| olefinische Doppelbindungen (MG = 24), Gew.-%, bezogen auf Feststoff: | 3,0 | 8,6 | 7,0 | 6,6 | 5,5 |

Vergleichsbeispiele

Vergleichsbeispiel 1

Statt einer getrennten Herstellung der Polyurethane A4 und B1 (Beispiel 5) mit anschließender Mischung wurde eine "Eintopfsynthese" durchgeführt:
Zu 222 g (1,0 Mol) Isophorondiisocyanat und 0,5 g Hydrochinonmanamethylether wird unter Rühren und Kühlen innerhalb von 2 Stunden 116 g (1,0 Mol) Hydroxyethylacrylat in der Weise zugetropft, daß die Temperatur 65°C nicht überschreitet. Nach Zusatz von 0,5 g Zinndioctoat und 98 g Butylacetat werden 35 g (0,46 Mol) Propandiol-1,2 sowie 60 g (0,04 Mol) Polyethylenglykol (MG 1550) zugetropft und die Mischung solange bei 60 bis 70°C gerührt, bis der NCO-Gehalt auf kleiner 0,1 Gew.-% gesunken ist. Es entsteht eine klare Flüssigkeit (Viskosität bei 23°C: 22 000 mPa.s). Der Gehalt an olefinischen Doppelbindungen liegt bei 5,5 Gew.-%, der Gehalt an Ethylenoxideinheiten bei 13,9 Gew.-%, entsprechend Beispiel 5.

Das entstandene Produkt wird im Dissolver wie die Beispiele 1 bis 5 mit Wasser geschert, konnte jedoch nicht in eine Öl-in-Wasser-Emulsion überführt werden.

Vergleichsbeispiel 2

Um mittels einer "Eintopfsynthese" (Vergleichsbeispiel 1) doch zu wasserverdünnbaren Produkten zu gelangen, wurde die Menge an Polyethylenglykol erhöht. Vergleichsbeispiel 1 wird exakt wiederholt mit der Änderung, daß nicht 60 g sondern 124 g (0,08 Mol) Polyethylenglykol eingesetzt werden. Um den molmäßigen Anteil an OH-Gruppen konstant zu halten, werden nicht 35 g sondern 32 g (0,42 Mol) Propandiol-1,2 eingesetzt. Es entsteht eine klare Flüssigkeit (Viskosität bei 23°C: 1150 mPa.s). Der Gehalt an olefinischen Doppelbindungen liegt bei 4,9 Gew.-%, an Ethylenoxideinheiten bei 25,1 Gew.-%.

Das entstandene Produkt wird im Dissolver wie die Beispiele 1 bis 5 mit Wasser geschert und auf 50 % Festkörper eingestellt. Es entsteht eine Emulsion, die sich jedoch nicht weiter verdünnen läßt.

Vergleichsbeispiel 3

Um zu zeigen, daß die Herstellungsweise der hydrophilen Polyurethane B wesentlich zur Erzeugung der gewünschten Emulgierwirkung ist, wurde das Polyurethan B1 nicht in erfindungsgemäßer Weise hergestellt:

Die Herstellungsweise für Polyurethan B1 wird exakt wiederholt mit der Änderung, daß man zuerst das Polyethylenglykol mit dem Diisacyanat reagieren läßt und dann erst das Hydroxyethylacrylat zugibt.

Es entsteht ein viskoses Produkt, das nach einiger Zeit auskristallisiert. Wird dieses Produkt analog Beispiel 5 mit Polyurethan A4 gemischt und unter Dissolver mit Wasser geschert, so entsteht eine grobteilige Öl-in-Wasser-Emulsion, die sich nach einigen Tagen wieder trennt.

Verwendungsbeispiele

a) peroxidische Härtung

Die wäßrigen Emulsionen der Beispiele 1 bis 5 sowie des Vergleichsbeispiels 2 werden mit 1 Gew.-% einer wäßrigen Kobaltacetatlösung (5 Gew.-% Metallgehalt) und 3 Gew.-% tert.-Butylperbenzoat versetzt und auf Glasplatten aufgezogen (Naßfimdicke: 90 $\mu$m).

Diese Lackfilme werden bei 125°C 30 Minuten erhitzt. Die Wasserfestigkeiten der ausgehärteten Filme wurden geprüft, indem die Filme mit Wasser benetzt und nach einer Einwirkungsdauer von 16 Stunden bei Raumtemperatur bewertet wurden. Wasserfest bedeutet keine sichtbaren Veränderungen des Films durch Fleckenbildung, Erweichen und Loslösen des Filmes von der Unterlage.

Die Lackfilmoberflächen der Beispiele 1 bis 5 sind wasser- und kratzfest und besitzen Pendelhärten (nach König DIN 53 157) von mehr als 150 s. Die Lackfilmoberfläche des Vergleichsbeispiels 2 ist weder wasser- noch kratzfest und besitzt eine Pendelhärte von 100 s.

b) Fotochemische Härtung

Die Beispiele 1 bis 5 sowie das Vergleichsbeispiel 2 werden vor dem Emulgieren mit je 5 g Fotoinitiator (1-4-Isopropylphenyl)-2-hydroxy-2-methylpropan-1-on gemischt. Nach dem Emulgieren werden die Produkte auf eine furnierte Spanplatte so aufgetragen, daß nach dem Abdunsten des Lösemittels ein Trockenauftrag von 30 $\mu$m erreicht wird. Die Platte wird mit einer Geschwindigkeit von 5 m/min unter einem Hanaviastrahler (80 W/cm, 10 cm Abstand) durchbewegt.

Nur bei den Lacken der Beispiele 1 bis 5 entstehen harte, kratz-, wasser- und chemikalienfeste Überzüge. Der Lack aus Vergleichsbeispiel 2 besitzt eine ungenügende Wasserfestigkeit sowie ungenügende Härte.

**Patentansprüche**

**1.** Verwendung von Polyurethanen **des Molekulargewichts Mw 1000 bis 10000** mit einem Gehalt an (i) olefinischen Doppelbindungen (berechnet als $=C=C=$, Molekulargewicht = 24) von mindestens 1,0 Gew.-% und an (ii) über Polyethylenglykol eingebauten Ethylenoxideinheiten von 20 bis 80 Gew.-%, die durch Umsetzung von

a) 1,0 Mol einer Polyisocyanatkomponente, bestehend aus mindestens einem organischen Polyisocyanat, mit

b) 0,9 bis 2,5 Mol einer (Meth)Acryloylgruppen aufweisenden Alkoholkomponente, bestehend aus mindestens einem (Meth)Acryloylgruppen aufweisenden einwertigen **Alkohol des Molekulargewichts Mn 116 bis 1000** und anschließende Umsetzung des aus a) und b) gebildeten Umsetzungsprodukts mit

c) 0,25 bis 0,55 Mol einer Polyethylenglykol-Komponente, bestehend aus mindestens einem **linearen Polyetherglykol des Molekulargewichts Mn 400 bis 4000, dessen Alkylenoxideinheiten zumindest zu 80% Ethylenoxideinheiten darstellen,**

unter Einhaltung eines NCO/OH-Äquivalentverhältnisses, bezogen auf alle Ausgangskomponenten a) bis c), von 0,7 : 1 bis 1,1 : 1 hergestellt worden sind,

als reaktive Emulgatoren für in Wasser nicht dispergierbare, radikalisch härtbare Kunstharze bei der Herstellung von wäßrigen Kunstharzdispersionen.

**2.** Wäßriges, ein radikalisch härtbares Bindemittel sowie gegebenenfalls aus der Lacktechnologie übliche Hilfs- und Zusatzmittel enthaltendes Beschichtungsmittel, dadurch gekennzeichnet, daß das Bindemittel im wesentlichen aus einem Gemisch besteht aus

A) 50 bis 95 Gew.-Teilen mindestens eines, in Wasser nicht dispergierbaren, mindestens 2,5 Gew.- % olefinische Doppelbindungen (berechnet als $=C=C=$, Molekulargewicht = 24) in Form von chemisch eingebauten (Meth)Acryloylgruppen aufweisenden Polyurethans des Molekulargewichtsbereichs Mw 500 bis 10000 **mit einem Gehalt an über Polyethylenglykole eingebauten Ethylenoxideinheiten von maximal 5 Gew.-%**

und

B) 5 bis 50 Gew.-Teilen mindestens eines, die Dispergierbarkeit des Gemischs in Wasser gewährleistenden Polyurethans mit einem Gehalt an (i) olefinischen Doppelbindungen (berechnet als $=C=C=$, Molekulargewicht $=24$) von mindestens 1,0 Gew.-% und an (ii) über Polyethylenglykol eingebauten Ethylenoxideinheiten von 20 bis 80 Gew.-%, das **entsprechend Anspruch 1 hergestellt worden ist,**

mit der Maßgabe, daß der Gesamtgehalt des Gemischs an von der Komponente c) herrührenden Ethylenoxideinheiten maximal 20 beträgt.

**Claims**

1. The use of polyurethanes having a molecular weight Mw of 1,000 to 10,000 and a content of (i) olefinic double bonds (expressed as $=C=C=$, molecular weight $=24$) of at least 1.0% by weight and (ii) ethylene oxide units incorporated through polyethylene glycol of from 20 to 80% by weight which have been obtained by reaction of

   a) 1.0 mol of a polyisocyanate component consisting of at least one organic polyisocyanate with

   b) 0.9 to 2.5 mol of an alcohol component containing (meth)acryloyl groups and consisting of at least one monohydric alcohol having a molecular weight Mn of 116 to 1,000 and containing (meth)acryloyl groups and subsequent reaction of the reaction product formed from a) and b) with

   c) 0.25 to 0.55 mol of a polyethylene glycol component consisting of at least one linear polyether glycol which has a molecular weight Mn of 400 to 4,000 and in which at least 80% of the alkylene oxide units consist of ethylene oxide units,

   at an NCO:OH equivalent ratio, based on all the starting components a) to c), maintained at 0.7:1 to 1.1:1,

   as reactive emulsifiers for non-water-dispersible, radical-curable synthetic resins in the production of aqueous synthetic resin dispersions.

2. An aqueous coating composition containing a radical-curable binder and, optionally, typical paint auxiliaries and additives, characterized in that the binder consists essentially of a mixture of

   A) 50 to 95 parts by weight of at least one non-water-dispersible polyurethane containing at least 2.5% by weight olefinic double bonds (expressed as $=C=C=$, molecular weight $=24$) in the form of chemically incorporated (meth)acryloyl groups and having a molecular weight Mw in the range from 500 to 5,000 and a content of ethylene oxide units incorporated through polyethylene glycols of at most 5% by weight

   and

   B) 5 to 50 parts by weight of at least one polyurethane obtained in accordance with claim 1 which guarantees the dispersibility of the mixture in water and has a content of (i) olefinic double bonds (expressed as $=C=C=$, molecular weight $=24$) of at least 1.0% by weight and (ii) ethylene oxide units incorporated through polyethylene glycol of 20 to 80% by weight,

   with the proviso that the total content in the mixture of ethylene oxide units emanating from component c) is at most 20.

**Revendications**

1. Utilisation de polyuréthannes de poids moléculaires Mw de 1000 à 10000 contenant (i) des doubles liaisons oléfiniques (calculées comme $=C=C=$, poids moléculaire $=24$) à raison d'au moins 1,0% en poids et (ii) des unités oxyde d'éthylène incorporées via du polyéthylèneglycol à raison de 20 à 80% en poids, obtenus en faisant réagir

   a) 1,0 mole d'un composant polyisocyanate comportant au moins un polyisocyanate organique, avec

   b) 0,9 à 2,5 moles d'un composant alcool présentant des groupes (méth)acryloyle, comportant au moins un alcool monofonctionnel de poids moléculaire Mn de 116 à 1000 contenant des groupes (méth)acryloyle, et en faisant réagir ensuite le produit formé par la réaction de a) et b) avec

   c) 0,25 à 0,55 mole d'un composant polyéthylèneglycol comportant au moins un polyétherglycol à chaîne linéaire de poids moléculaire Mn de 400 à 4000 dont les unités oxyde d'alkylène comportent au moins jusqu'à 80% d'unités oxyde d'éthylène,

   en respectant un rapport des équivalents NCO/OH de 0,7:1 à 1,1:1 par rapport à tous les composants de départ a) à c), comme émulsifiants réactifs pour des résines synthétiques à durcissement radicalaire ne pouvant pas être dispersées dans l'eau, pour la fabrication de dispersions aqueuses de résines synthétiques.

2.  Produit de revêtement aqueux contenant un liant à durcissement radicalaire ainsi qu'éventuellement des adjuvants et additifs usuels de la technologie des peintures et vernis, caractérisé en ce que le liant se compose substantiellement d'un mélange de

    A) 50 à 95 parties en poids d'au moins un polyuréthanne de poids moléculaire Mw de 500 à 10000, ne pouvant pas être dispersé dans l'eau, présentant au moins 2,5% en poids de doubles liaisons oléfiniques (comptées comme $=C=C=$, poids moléculaire = 24) sous forme de groupes (méth)-acryloyle incorporés chimiquement, avec une teneur maximale de 5% en poids en unités oxyde d'éthylène incorporées vis du polyéthylèneglycol

    et

    B) 5 à 50 parties en poids d'au moins un polyuréthanne garantissant la possibilité de dispersion du mélange dans l'eau, avec (i) une teneur d'au moins 1,0% en poids en doubles liaisons oléfiniques (comptées comme $=C=C=$, poids moléculaire = 24) et (ii) une teneur de 20 à 80% en poids en unités oxyde d'éthylène incorporées via du polyéthylèneglycol, fabriqué selon la revendication 1,

avec la condition que la teneur totale du mélange en unités oxyde d'éthylène provenant du composant c) soit au maximum égale à 20.